# DEMANDE DE BREVET EUROPEEN

(11) **EP 1 796 373 A1**
(43) Date de publication de la demande: **13.06.2007**
(21) Numéro de dépôt: 05111984.0
(22) Date de dépôt: 12.12.2005
(51) Int. Cl.: H04N 3/15

(54) **Pocédé d'obtention d'une image à l'aide d'un capteur d'images à gamme dynamique etendue**

(71) Demandeur: The Swatch Group Research and Development Ltd., 2074 Marin (CH)
(72) Inventeur: Genilloud, Laurent, 1680, Romont (CH); Heck, Pascal, 1196 Gland (CH)
(74) Mandataire: Vigand, Philippe

(57) **Abrégé**

Le procédé d'obtention d'une image est effectué à l'aide d'un capteur d'images à gamme dynamique étendue. Le capteur comprend une cellule photosensible formée d'un ensemble de pixels (1). Chaque pixel comporte une photodiode (PD) pour accumuler des porteurs de charge en fonction du niveau de son illumination, un premier transistor d'initialisation (M1) relié en série à la photodiode entre deux bornes d'alimentation d'une source de tension, un condensateur (C1) couplé à la photodiode (PD) par l'intermédiaire d'un second transistor d'échantillonnage (M2) pour mémoriser un niveau de tension de la photodiode (PD), un troisième transistor d'initialisation (M3) relié en série au condensateur entre les deux bornes d'alimentation, et des quatrième et cinquième transistors (M4, M5) connectés en série, dont une borne de grille du quatrième transistor est reliée au condensateur pour une lecture du niveau de tension du condensateur. Le procédé consiste tout d'abord à initialiser le condensateur et la photodiode à une première tension d'initialisation proche de la tension haute (V_{DD}) d'une source de tension par conduction des second et troisième transistors, puis à rendre le second transistor non conducteur pour débuter une première longue période d'exposition de la photodiode. Au terme de la première période d'exposition, le premier transistor est rendu brièvement conducteur pour initialiser la photodiode à une seconde tension d'initialisation d'un niveau inférieur à la première tension d'initialisation pour débuter une seconde courte période d'exposition. Vers la fin de la seconde période d'exposition, une mémorisation du niveau de tension de la photodiode est effectuée sur le condensateur afin de pouvoir être lue par l'intermédiaire des quatrième et cinquième transistors.

## Description

L'invention concerne un procédé pour obtenir une image à l'aide d'un capteur d'images à gamme dynamique étendue.

Le capteur d'images peut être facilement réalisé par exemple dans une technologie du type CMOS. De tels capteurs d'image CMOS sont destinés par exemple à la réalisation de dispositifs photographiques qui peuvent équiper des instruments portables de petite taille, tels que des montres-bracelets. Dans de tels instruments alimentés par une pile ou un accumulateur, il est nécessaire de réduire la consommation électrique de chaque composant électronique. De ce fait, le capteur d'images doit être réalisé de manière à consommer peu d'énergie électrique lors des opérations de prise d'images ou de leur traitement.

Grâce aux technologies actuelles d'intégration, un tel capteur d'images comprend, sur une même puce, une cellule photosensible formée d'un ensemble de pixels, et un composant de traitement destiné à assurer les opérations de prise d'images et de lecture de l'information capturée par la cellule photosensible. Les pixels sont organisés typiquement sous forme d'une matrice agencée en lignes et en colonnes. La matrice occupe la majeure partie de la surface du capteur. Pour la lecture d'un pixel particulier de la matrice, il est effectué un adressage de la ligne et de la colonne correspondantes. A cet effet, le capteur comprend traditionnellement un circuit d'adressage de ligne couplé aux lignes de la matrice et un bus de sortie couplé aux colonnes de la matrice, tous deux commandés par un circuit de commande.

Des éléments photo-détecteurs des pixels de la cellule peuvent être constitués de capacités à jonction p-n d'un substrat semi-conducteur pour capter des photons. Ces capacités à jonction sont communément dénommées photodiodes, qui ont l'avantage d'être compatibles avec les processus de fabrication CMOS standard.

Dans un fonctionnement normal, chaque photodiode est inversement polarisée à une tension donnée par exemple entre 0 et 2 V. Les photons captés par la photodiode déchargent une capacité de la photodiode en générant des paires électron-trou. Ces paires électron-trou sont collectées par les électrodes opposées de la capacité et par conséquent réduisent l'écart de tension aux bornes de la capacité dans une gamme dynamique déterminée de tension du capteur. Cette gamme dynamique de tension du capteur est inférieure à la tension de polarisation de la photodiode, par exemple égale à 1,5 V, mais cette condition n'est cependant pas limitative.

Chaque pixel de la matrice peut posséder une structure conforme à l'illustration de la figure 1 équivalente à la structure de la figure 2B du document EP 1 128 661 du même Demandeur, dont la description relative à cette figure 2B et au procédé d'obtention d'une image est incorporée ici comme référence. Ce pixel 1 comporte un élément photo-détecteur, tel qu'une photodiode inversement polarisée PD, un moyen de stockage, tel qu'un condensateur C1 et cinq transistors M1 à M5 par exemple du type n-MOS. La photodiode permet de collecter les électrons photo-générés durant une période dite d'intégration ou d'exposition, alors que le moyen de stockage permet de mémoriser la valeur de tension présente aux bornes de la photodiode PD durant une phase d'échantillonnage.

Le transistor M1 est connecté en série avec la photodiode entre une borne d'alimentation électrique haute V_{DD} et une borne d'alimentation électrique basse V_{SS} d'une source de tension non représentée. Selon l'art antérieur, ce transistor M1, qui est commandé par un signal d'initialisation TI sur sa borne de grille, assure l'initialisation de la photodiode PD à une tension déterminée avant chaque période d'intégration ou d'exposition.

Le transistor M2 relie le condensateur C1 au noeud de connexion entre le transistor M1 et la photodiode PD. Ce transistor M2, qui est commandé par un signal d'échantillonnage SH, assure l'échantillonnage de la charge accumulée par la photodiode PD et la mémorisation du signal ainsi échantillonné sur le condensateur. Ce transistor M2 assure par ailleurs un isolement ou découplage de la photodiode PD et du condensateur C1.

Le transistor M3 est relié en série avec le condensateur C1 entre les deux bornes d'alimentation électrique V_{DD} et V_{SS}. Selon l'art antérieur, ce transistor M3, qui est commandé par un signal d'initialisation RST, assure notamment l'initialisation du condensateur à une tension déterminée.

Le transistor M4 est un transistor à "source suiveuse" ("source follower transistor") dont la borne de grille est reliée au noeud de connexion entre la borne de source du transistor M3 et le condensateur C1, et la borne de drain est connectée à la borne d'alimentation électrique haute V_{DD}. Le transistor M4 est disposé en série avec le transistor M5, qui est un transistor de sélection de ligne. Le transistor M5, qui est commandé par un signal de sélection de ligne RSEL, assure, lors du processus de lecture, le transfert de la tension du transistor M4 sur un bus de sortie commun à tous les pixels dans une colonne.

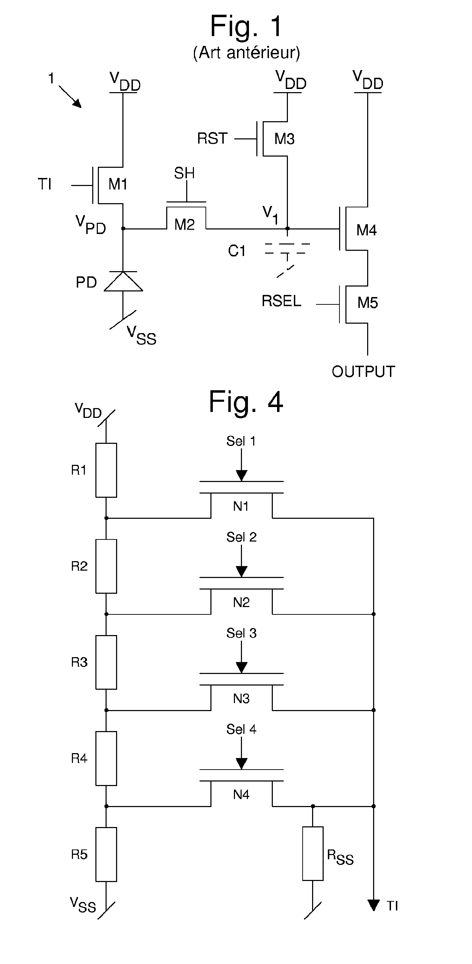

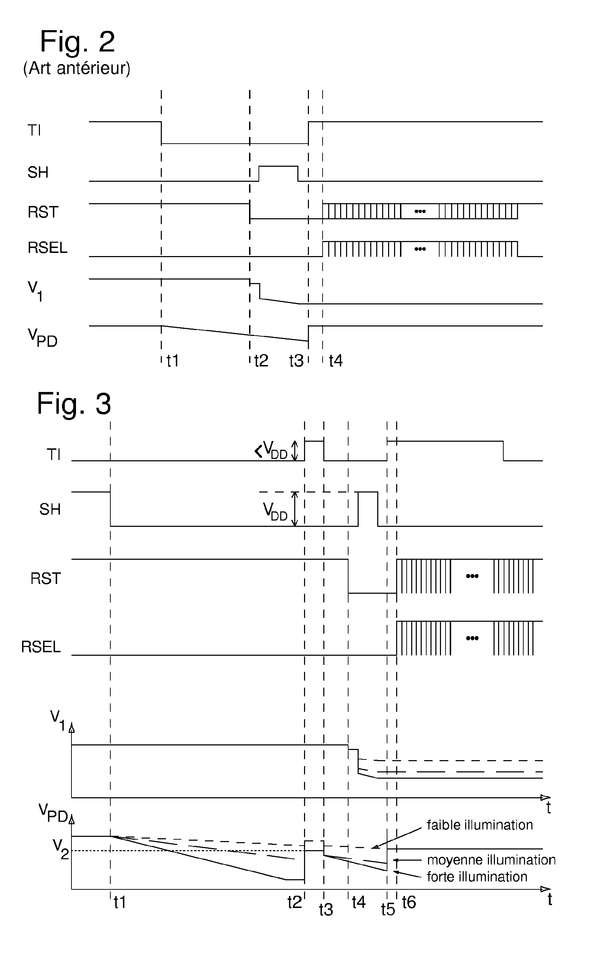

En référence à la figure 2, il est décrit le procédé traditionnel d'obtention d'une image à l'aide d'un capteur d'images, dont la structure de chaque pixel est représentée à la figure 1. Cette figure 2 représente ainsi un diagramme temporel de l'évolution des signaux de commande TI, SH, RST et RSEL permettant d'opérer la structure de pixel de la figure 1, ainsi que schématiquement l'évolution de la tension V_{PD} de la photodiode PD et l'évolution de la tension V₁ sur le condensateur C1.

Lors d'une première phase d'initialisation, les premier et second signaux d'initialisation TI et RST sont tous deux amener à un niveau de tension positif haut proche de V_{DD}. De cette manière, une initialisation respectivement de la photodiode PD et du condensateur C1 de chaque pixel est effectuée à une tension d'initialisation déterminée. Le signal d'échantillonnage SH est quant à lui à un niveau bas tel que le transistor M2 n'est pas conducteur, ce qui permet de découpler la photodiode PD et le condensateur C1. De même, le signal de sélection de ligne RSEL est à un niveau bas de sorte que le transistor de sélection de ligne M5 n'est pas conducteur. Les tensions résultantes V_{PD} et V₁ sur la photodiode PD et le condensateur C1 se trouvent donc à des niveaux sensiblement égaux à la tension d'initialisation déterminée.

Au terme de la phase d'initialisation au temps t1, le premier signal d'initialisation TI passe à un niveau bas rendant le transistor M1 non conducteur, ce qui débute la période d'exposition ou d'intégration des photodiodes PD du capteur d'images. Sous l'effet d'une illumination, les photodiodes PD commencent à se décharger proportionnellement à la quantité de lumière que chacune d'entre elles reçoit comme le montre l'évolution de la tension V_{PD} entre t1 et t3. Le signal d'initialisation RST est maintenu à l'état haut pour maintenir le condensateur C1 à un niveau de tension constant proche de V_{DD}.

Après une période d'exposition déterminée au temps t2, le second signal d'initialisation RST passe à un niveau bas, libérant ainsi le noeud mémoire sur le condensateur C1. Le signal d'échantillonnage SH passe ensuite brièvement à un niveau haut permettant de rendre le transistor M2 conducteur. Ceci permet l'échantillonnage de la valeur de tension présente sur la photodiode PD et sa mémorisation sur le condensateur C1. La tension V₁ aux bornes du condensateur C1 évolue ainsi comme le montre la figure 2. Au temps t3, la durée d'exposition du capteur se termine. Le condensateur de chaque pixel garde en mémoire la valeur de tension de la photodiode en fonction de son illumination dès que le transistor M2 est rendu non conducteur.

Une fois la valeur de tension mémorisée sur le condensateur C1, le premier signal d'initialisation TI est amené à nouveau à un niveau tel que chaque photodiode est à nouveau initialisée à une tension sensiblement égale à la tension d'initialisation proche de V_{DD}. La tension échantillonnée mémorisée sur le condensateur de chaque pixel du capteur n'est ainsi pas perturbée par le phénomène de diffusion de porteurs de charge, de sorte que la tension présente sur ce condensateur reste constante. Une phase de lecture de la valeur de tension mémorisée sur le condensateur intervient au temps t4 pour chaque ligne de pixels du capteur successivement.

Dans une période d'exposition déterminée lors d'une prise d'image, plus le nombre de photons captés par chaque photodiode est important, et plus la capacité de la photodiode se décharge rapidement. Généralement en cas de forte illumination de la photodiode, la capacité de la photodiode se décharge rapidement jusqu'à une valeur minimale de tension fonction de la gamme dynamique de tension du capteur, ce qui n'est pas illustré par la figure 2. Par contre en cas de faible ou moyenne illumination de la photodiode, la tension aux bornes de la capacité de la photodiode permet de donner une information significative de l'image captée. De manière à obtenir au terme d'une période d'exposition définie une information significative de l'image captée en forte et en faible illumination, le capteur doit comprendre des moyens permettant d'augmenter sa gamme dynamique de tension.

A ce titre, différents procédés pour augmenter la gamme dynamique d'un capteur d'images ont déjà été proposés. Un des procédés consiste par exemple à fusionner à l'aide d'un traitement numérique deux images prises à des temps d'exposition différents. Comme cela nécessite de stocker une image en mémoire, beaucoup de place sur le circuit est utilisée. Ceci n'est donc pas applicable à un capteur d'images susceptible d'équiper un instrument de petit volume. Il est possible également d'ajouter plusieurs composants électroniques dans les pixels de la cellule photosensible du capteur d'images pour augmenter la gamme dynamique. Cependant dans ce cas, cela réduit considérablement le rapport surface collectrice de lumière sur la surface du pixel, ce qui est un inconvénient.

On peut citer également le document WO 2004/064386 qui décrit un capteur d'images à commande de la fonction de transfert pour étendre la gamme dynamique du capteur. Une photodiode inversement polarisée est connectée en série à un transistor d'initialisation ou reset du type MOS entre deux bornes d'une source d'alimentation. Ce transistor MOS permet de charger initialement la photodiode à une première tension d'initialisation déterminée proche de la valeur de tension haute de la source d'alimentation. Le transistor MOS est ensuite déconnecté afin que débute une première période longue d'exposition de la photodiode en parallèle avec un condensateur de stockage de charges. En fonction du niveau d'illumination de la photodiode, le condensateur se décharge plus ou moins rapidement pendant la première période d'exposition. Le condensateur est susceptible de se décharger au maximum jusqu'à une valeur de tension minimale définie par la gamme dynamique du capteur si la photodiode est fortement illuminée.

Une seconde opération d'initialisation ou de reset de la photodiode est effectuée par le transistor MOS à un niveau inférieur à la première tension d'initialisation. Dans le cas d'une faible illumination de la photodiode, cette seconde opération d'initialisation n'a aucune influence sur le niveau de tension de la photodiode. Par contre dans le cas d'une forte illumination de la photodiode, le niveau de tension de la photodiode est réinitialisée à une seconde tension d'initialisation inférieure à la première tension d'initialisation. Le transistor MOS est ensuite à nouveau déconnecté pour débuter une seconde période courte d'exposition de la photodiode.

Pendant les différentes périodes d'exposition de la photodiode une opération de lecture de la charge accumulée sur le condensateur est effectuée par l'intermédiaire d'un montage de transistors suiveurs. Grâce à au moins deux périodes d'exposition de la photodiode, il est ainsi possible d'obtenir une information significative pour une photodiode faiblement, moyennement ou fortement illuminée, ce qui a pour effet d'étendre la gamme dynamique de tension du capteur d'images.

Un inconvénient de la solution proposée dans le document WO 2004/064386 est que le condensateur de stockage de charges est directement mis en parallèle de la photodiode. De ce fait, à chaque opération d'initialisation de la photodiode, le condensateur est également initialisé au niveau de tension de la photodiode. Plusieurs opérations de lecture de la valeur de la tension sur le condensateur doivent donc être effectuées, ce qui complique le traitement de l'information fournie par chaque pixel.

Il est à noter également qu'un unique transistor d'initialisation est utilisé pour initialiser la photodiode avant chaque période d'exposition. De ce fait, il est nécessaire d'ajuster la tension de grille du transistor MOS à des niveaux différents de tension lors des différentes opérations d'initialisation de la photodiode, ce qui peut compliquer la réalisation du capteur d'image.

L'invention a donc pour but principal de fournir un procédé d'obtention d'une image à l'aide d'un capteur d'images à gamme dynamique étendue par des moyens simples afin d'obtenir une image bien contrastée à tout niveau d'illumination en palliant les inconvénients de l'art antérieur cités ci-dessus. De plus, le procédé d'obtention d'une image permet d'opérer le capteur d'images en réduisant au maximum sa consommation électrique de manière à équiper un instrument de petit volume, tel qu'une montre.

A cet effet, l'invention concerne un procédé d'obtention d'une image à l'aide d'un capteur d'images à gamme dynamique étendue cité ci-devant, qui comprend les caractéristiques mentionnées dans la revendication 1.

Des formes d'exécution avantageuses sont définies dans les revendications dépendantes 2 à 7.

Un avantage du procédé d'obtention d'une image réside dans le fait que les deux opérations d'initialisation de l'élément photo-détecteur sont réalisées par la commande de deux transistors différents. La seconde opération d'initialisation de l'élément photo-détecteur est réalisée notamment en commandant uniquement le premier transistor d'initialisation par une tension de commande bien définie appliquée sur sa borne de commande. Ceci permet de fournir une seconde tension d'initialisation à l'élément photo-détecteur, tel qu'une photodiode inversement polarisée, qui est inférieure à la première tension d'initialisation.

La seconde tension d'initialisation peut être déterminée en sélectionnant un parmi plusieurs niveaux de tension d'un circuit de commande qui fournit le signal de commande à la borne de commande du premier transistor. Les différents niveaux de tension du circuit de commande sont obtenus à l'aide d'un diviseur résistif, qui comprend de préférence plus de deux résistances connectées en série entre les deux bornes d'alimentation électrique d'une source de tension continue de chaque pixel. Le choix d'un niveau de tension est obtenu par la commande d'un transistor commutateur reliant un noeud de connexion de deux résistances adjacentes et la borne de commande du premier transistor.

Avantageusement, la seconde période d'exposition de chaque élément photo-détecteur, tel qu'une photodiode, est de durée bien plus courte que la première période d'exposition de manière à obtenir une information à la fin des deux périodes d'exposition aussi bien pour une photodiode fortement illuminée que pour une photodiode faiblement illuminée. De préférence, la durée de la seconde période d'exposition est 20 fois inférieure à la durée de la première période d'exposition, ce qui permet de parler d'un capteur d'images à gamme dynamique étendue.

Les buts, avantages et caractéristiques du procédé d'obtention d'une image à l'aide d'un capteur d'images à gamme dynamique étendue apparaîtront mieux dans la description suivante en regard des dessins sur lesquels :
- la figure 1 déjà citée représente schématiquement une structure connue d'un pixel du capteur d'images pour la mise en oeuvre du procédé selon l'invention,
- la figure 2 déjà citée représente un diagramme temporel illustrant la séquence de signaux appliqués sur la structure du pixel de la figure 1 et la tension aux bornes du moyen de stockage et de l'élément photo-détecteur d'un procédé de l'art antérieur,
- la figure 3 représente un diagramme temporel illustrant la séquence de signaux appliqués sur la structure du pixel de la figure 1 durant au moins deux périodes d'exposition et la tension aux bornes du moyen de stockage et de l'élément photo-détecteur du procédé selon l'invention, et
- la figure 4 représente un circuit de commande d'un transistor d'initialisation d'un pixel du capteur d'images pour la mise en oeuvre du procédé selon l'invention.

Le procédé d'obtention d'une image à l'aide d'un capteur d'images à gamme dynamique étendue sera décrit préférablement ci-après sur la base d'une structure de pixel telle que présentée à la figure 1 décrite ci-devant. Dans cette forme d'exécution de la figure 1, les cinq transistors M1 à M5 sont de préférence des transistors n-MOS réalisés dans une technologie CMOS.

La borne de drain du premier transistor d'initialisation M1 est connectée à la borne d'alimentation électrique haute V_{DD} d'une source de tension continue non représentée. La borne de source du transistor M1 est connectée à un élément photo-détecteur, qui est une photodiode PD inversement polarisée reliée à la borne d'alimentation basse V_{S} de la source de tension. La conduction du transistor M1 est commandée par un signal de commande TI appliqué sur sa borne de grille. Le niveau de tension haut du signal de commande TI peut être adapté comme expliqué ci-après en référence à la figure 4 en fonction du niveau d'illumination général d'une prise d'image par la cellule photosensible du capteur.

La borne de drain du second transistor d'échantillonnage M2 est connectée au noeud de connexion du premier transistor M1 et de la photodiode PD, alors que la borne de source du second transistor M2 est connectée à une borne d'un condensateur C1, agissant comme moyen de stockage. La conduction de ce second transistor M2 est commandée par un signal d'échantillonnage SH appliqué sur sa borne de grille. Le condensateur C1 peut n'être constitué que de jonctions p-n à travers le substrat semi-conducteur au niveau du noeud mémoire.

La borne de drain du troisième transistor d'initialisation M3 est connectée à la borne d'alimentation haute V_{DD}, alors que sa borne de source est connectée à un noeud de mémorisation du condensateur C1. La conduction de ce troisième transistor M3 est commandée par un signal de commande RST appliqué sur sa borne de grille.

La borne de drain du quatrième transistor suiveur M4 est connectée à la borne d'alimentation haute V_{DD}. La borne de grille du transistor M4 est reliée au noeud de mémorisation du condensateur C1, alors que sa borne de source est connectée à la borne de drain du transistor M5. La borne de source de ce transistor M5 est susceptible de fournir un signal de sortie OUTPUT sur un bus de sortie commun à tous les pixels dans une colonne de la matrice de la cellule photosensible. La lecture du niveau de tension mémorisé par le condensateur est effectuée par la conduction du transistor M5 à l'aide d'un signal de sélection de ligne RSEL appliqué sur sa borne de grille.

Tous les signaux de commande des bornes de grille des cinq transistors M1 à M5 sont gérés par une unité à microprocesseur du capteur d'images qui n'est pas représentée sur les dessins. Aucune information sur la manière de traiter les signaux par l'unité à microprocesseur n'est donnée dans la description, car elle fait partie des connaissances générales d'un homme du métier dans ce domaine technique.

Il est à noter que le procédé peut être appliqué de manière analogue à tout autre type de structure de pixel, qui comprend un agencement de cinq transistors M1 à M5, un élément photo-détecteur PD et un moyen de stockage C1 d'un autre type. Les transistors peuvent être des transistors p-MOS et la photodiode PD peut être connectée à la borne d'alimentation haute V_{DD} de la source de tension. D'autres types de transistors, tels que des transistors bipolaires peuvent également être envisagés. Cependant ces transistors bipolaires consomment plus d'énergie électrique que les transistors MOS tels que présentés à la figure 1. De ce fait, ils ne sont pas adaptés à la réalisation d'un capteur d'images susceptibles d'équiper un instrument portable de petit volume, tel qu'une montre-bracelet.

A la figure 3, les différentes étapes du procédé d'obtention d'une image à l'aide d'un capteur à gamme dynamique étendue seront maintenant décrites en référence à la structure de pixel de la figure 1. De manière à simplifier la description des étapes du procédé d'obtention d'une image, les différentes durées temporelles de chaque phase ne sont pas indiquées de manière exacte sur cette figure 3. Les périodes d'exposition des photodiodes de la cellule photosensible du capteur d'images sont généralement adaptées en fonction d'un niveau moyen d'illumination d'une image à capter. La première période d'exposition peut être définie entre 35 µs et 5 s fonction du niveau moyen d'illumination.

Une première initialisation de chaque photodiode, ainsi que de chaque condensateur est effectuée de manière globale sur les pixels du capteur d'images au début des opérations de prise d'image. Pour ce faire, le signal d'échantillonnage SH, ainsi que le premier signal de commande d'initialisation RST, qui sont appliqués sur les bornes de grille respectivement des transistors M3 et M2 montrés à la figure 1, sont dans un état haut proche de la tension haute V_{DD} de la source d'alimentation en tension continue des pixels. Dans cet état haut, le second transistor d'échantillonnage et le troisième transistor d'initialisation sont dans un état conducteur. Une première tension d'initialisation proche de V_{DD} est donc imposée à la photodiode, comme représenté par le diagramme V_{PD}, et au condensateur, comme montré par le diagramme V₁. Dans la première phase d'initialisation, le signal de commande TI de la borne de grille du premier transistor d'initialisation M1, est dans un état bas proche de la tension basse V_{SS} de la source de tension pour rendre le premier transistor non conducteur. Les transistors suiveurs M4 et M5 de lecture d'une information mémorisée sur le condensateur sont également dans un état non conducteur.

Une première période d'exposition de chaque photodiode débute au temps t1. Pour cela, le signal d'échantillonnage SH passe à l'état bas afin de rendre le second transistor d'échantillonnage non conducteur et permettre de découpler la photodiode du condensateur. Chaque photodiode initialement chargée à une première tension d'initialisation proche de V_{DD} accumule des porteurs de charge, c'est-à-dire capte une certaine quantité de photons représentatifs d'un niveau d'illumination déterminé. De ce fait, la photodiode se décharge progressivement pendant la première période d'exposition selon une pente fonction du niveau de son illumination.

En cas de forte illumination, la photodiode se décharge rapidement jusqu'à une valeur minimale de tension de la gamme dynamique avant le terme de la première période d'exposition comme montré par la courbe en trait plein du diagramme de la tension V_{PD}. Ceci représente un état de saturation de la photodiode pour lequel il est constaté une perte d'information du pixel fortement illuminé. Par contre en cas de faible ou moyenne illumination, la photodiode se décharge progressivement pendant toute la durée de la première période d'exposition jusqu'au temps t2 sans atteindre la valeur minimale de tension comme montré par les courbes en traits interrompus.

Au terme de la première période d'exposition au temps t2, une seconde opération d'initialisation de chaque photodiode est effectuée par l'intermédiaire uniquement du premier transistor d'initialisation M1 de la figure 1. Ce premier transistor est destiné à travailler en mode saturé en dessus de sa tension de seuil. Pour ce faire, le signal d'initialisation TI passe à l'état haut à une tension inférieure à V_{DD} pendant un laps de temps très court à l'instant t2 et jusqu'au temps t3. Ce laps de temps très court de la seconde initialisation de la photodiode permet de ne pas introduire dans l'image captée une perturbation de l'information spatiale. Le niveau de tension à l'état haut du signal d'initialisation TI pour rendre conducteur le premier transistor peut être sélectionné comme décrit ci-après en référence à la figure 4.

Etant donné que la tension de grille du premier transistor est ajustée à un niveau inférieur à la tension V_{DD}, la seconde tension d'initialisation V₂ de la photodiode est définie inférieure à la première tension d'initialisation proche de V_{DD} selon une caractéristique principale du procédé selon l'invention. Le niveau de tension de la photodiode est donc ramené à cette seconde tension V₂ pour une photodiode fortement ou moyennement illuminée, comme montré à la figure 3. Par contre dans le cas d'une faible illumination de la photodiode, le niveau de tension reste supérieur à cette seconde tension d'initialisation V₂. Ce niveau de tension reste constant pendant la courte période d'initialisation de t2 à t3, mais avec une légère augmentation du niveau de tension de la photodiode dû à des charges positives se trouvant dans le canal du premier transistor, qui sont injectées en partie vers V_{DD} et en partie vers la photodiode.

Au temps t3, une seconde période d'exposition de chaque photodiode débute dans laquelle le premier transistor est rendu non conducteur par le signal d'initialisation TI passant à l'état bas proche de la tension basse V_{SS}. Dès cet instant, chaque photodiode se décharge depuis le niveau de tension défini lors de la seconde initialisation en fonction du niveau de son illumination, et jusqu'au temps t5. La seconde période d'exposition est définie beaucoup plus courte que la première période d'exposition par exemple dans un rapport 1/20 pour que chaque photodiode fortement illuminée n'atteigne pas la valeur minimale de tension de saturation. Ce rapport peut être défini entre 1/4 et 1/100. De cette manière, il est possible d'obtenir au terme des deux périodes d'exposition une information spécifique aussi bien pour une photodiode fortement illuminée que pour une photodiode moyennement ou faiblement illuminée. Une image bien contrastée à tout niveau d'illumination peut ainsi être obtenue par le capteur d'images grâce au procédé selon l'invention.

Pendant la seconde période d'exposition, une mémorisation sur le condensateur de la valeur de tension de la photodiode V_{PD} doit être effectuée. Pour ce faire, le signal d'initialisation RST, qui est appliqué à la borne de grille du troisième transistor, doit tout d'abord passer d'un état haut à un état bas au temps t4. Le troisième transistor devient ainsi non conducteur au temps t4 afin de libérer le condensateur préalablement maintenu à une première tension d'initialisation proche de V_{DD} comme montré sur le diagramme V₁. Le second transistor d'échantillonnage doit ensuite être rendu conducteur brièvement vers la fin de la seconde période d'échantillonnage entre le temps t4 et le temps t5. Le signal d'échantillonnage SH, qui est imposé à la borne de grille du second transistor, doit donc passer brièvement d'un état bas à un état haut proche de la tension V_{DD}. Pendant que le second transistor est dans un état conducteur, un transfert de charges est réalisé de la photodiode au condensateur. Ceci permet de mémoriser la valeur de tension de la photodiode sur le condensateur dès que le signal d'échantillonnage SH passe à nouveau à l'état bas.

La valeur de tension mémorisée sur chaque condensateur permet de fournir une information spécifique fonction du niveau d'illumination capté par chaque photodiode pendant toute la durée des périodes d'exposition. Grâce à cette double exposition correspondant à un capteur à gamme dynamique étendue, il est possible d'obtenir une image bien contrastée à tout niveau d'illumination.

Avant une opération de lecture de la valeur de tension mémorisée sur chaque condensateur, chaque photodiode est réinitialisée à la seconde tension d'initialisation au temps t5. Pour ce faire, le signal d'initialisation TI passe de l'état bas à l'état haut, dont le niveau de tension est adapté inférieur à V_{DD}, afin de rendre conducteur le premier transistor. La valeur de tension mémorisée sur le condensateur de chaque pixel n'est ainsi pas perturbée par le phénomène de diffusion de porteurs de charge. La valeur de tension présente sur ce condensateur reste donc constante.

Au temps t6, une opération de lecture de la valeur de tension mémorisée sur chaque condensateur peut débuter. Cette opération de lecture s'effectue selon une technique bien connue comme expliquée également dans le document EP 1 128 661 dont la description relative à cette opération est incorporée ici comme référence. Pour ce faire, un signal de sélection de ligne RSEL est appliqué ligne par ligne lors du processus de lecture sur la borne de grille de chaque cinquième transistor M5 de la figure 1. Au cours de l'opération de lecture, le signal d'initialisation TI du premier transistor peut être amené à l'état bas pour rendre le premier transistor non conducteur. De cette façon après l'opération de lecture, une nouvelle opération de prise d'image peut être effectuée.

La figure 4 représente un circuit de commande susceptible de fournir un signal d'initialisation TI bien défini à la borne de grille du premier transistor d'initialisation d'une structure de pixel de la figure 1 pour la mise en oeuvre du procédé selon l'invention. La tension appliquée à la borne de grille du premier transistor d'initialisation à rendre conducteur doit être adaptée à une valeur inférieure à la première tension d'initialisation proche de V_{DD} de manière à initialiser la photodiode avant la seconde période d'exposition. La tension d'alimentation V_{DD} est par exemple égale à 2.5 V pour un capteur qui est réalisé notamment dans une technologie TSMC à 0.25 µm. Pour ce faire, le circuit comprend un diviseur résistif, qui est composé d'au moins deux résistances connectées en série entre les bornes d'alimentation V_{DD} et V_{SS}. Dans cet exemple, le diviseur résistif comprend 5 résistances R1 à R5 connectées en série dont la valeur de chaque résistance est choisie pour disposer de plusieurs niveaux de tension continue bien adaptés à la seconde initialisation de la photodiode.

La valeur de la résistance R5 peut être par exemple égale à l'addition de la valeur des quatre résistances R1 à R4, qui ont chacune la même valeur. Dans ce cas pour une tension d'alimentation V_{DD} égale à 2.5 V, la tension au noeud de connexion entre les résistances R4 et R5, qui est relié à la borne de drain d'un transistor commutateur N4 du type n-MOS, est égale à 1.25 V. La tension au noeud de connexion entre les résistances R3 et R4, qui est relié à la borne de drain d'un transistor commutateur N3 de type n-MOS, est égale à 1.56 V. La tension au noeud de connexion entre les résistances R2 et R3, qui est relié à la borne de drain d'un transistor commutateur N2 de type n-MOS, est égale à 1.87 V. Finalement, la tension au noeud de connexion entre les résistances R1 et R2, qui est relié à la borne de drain d'un transistor commutateur N1 de type n-MOS, est égale à 2.18 V.

La borne de source des transistors N1, N2, N3 et N4 est reliée en commun à la borne de grille du premier transistor non représenté sur cette figure 4. Selon une programmation effectuée classiquement dans une unité à microprocesseur du capteur d'images, un seul des quatre transistors N1, N2, N3 et N4 est commandé sur sa borne de grille par un signal de commande Sel 1, Sel 2, Sel 3 ou Sel 4 pour fournir le signal d'initialisation TI.

Chaque signal de commande Sel 1, Sel 2, Sel 3 ou Sel 4 d'un transistor commutateur N1, N2, N3 ou N4 est de forme équivalente au signal de commande TI de la borne de grille du premier transistor. Lorsque le signal de commande du transistor commutateur sélectionné N1, N2, N3 ou N4 est à l'état haut proche de V_{DD} par simplification électronique pour rendre conducteur ledit transistor commutateur, la tension présente au noeud de connexion de deux résistances, qui est relié au transistor commutateur sélectionné, est fournie à la borne de grille du premier transistor. De cette façon, le premier transistor d'initialisation de la photodiode est facilement rendu conducteur par une tension de grille adaptée par le circuit de commande pour obtenir une seconde tension d'initialisation désirée de la photodiode. Une résistance R_{SS}, qui est connectée entre la borne de grille du premier transistor et la borne de tension basse V_{SS}, permet de faire passer facilement le premier transistor dans un état non conducteur, quand le signal de commande du transistor commutateur sélectionné est à l'état bas.

A partir de la description qui vient d'être faite, de multiples variantes du procédé d'obtention d'une image à l'aide d'un capteur d'images à gamme dynamique étendue peuvent être conçues par l'homme du métier sans sortir du cadre de l'invention définie par les revendications. Plus de deux périodes d'exposition de chaque photodiode peuvent être envisagées pour l'obtention d'une image tout en effectuant la première initialisation à l'aide du troisième transistor et la seconde ou suivante initialisation à l'aide du premier transistor. La seconde tension d'initialisation de chaque photodiode peut être changée facilement d'une image à l'autre à l'aide du circuit de commande fonction du niveau de l'illumination.

## Revendications

1. Procédé d'obtention d'une image à l'aide d'un capteur d'images à gamme dynamique étendue, le capteur, réalisé notamment dans une technologie de type CMOS, comportant une cellule photosensible formée d'un ensemble de pixels (1), chaque pixel comportant un élément photo-détecteur (PD) pour accumuler des porteurs de charge en fonction du niveau de son illumination, un premier transistor d'initialisation (M1) relié en série à l'élément photo-détecteur entre deux bornes d'alimentation d'une source de tension, un moyen de stockage (C1) susceptible d'être couplé au dit élément photo-détecteur (PD) par l'intermédiaire d'un second transistor d'échantillonnage (M2) pour mémoriser un niveau de tension représentatif desdits porteurs de charge accumulés par ledit élément photo-détecteur (PD), un troisième transistor d'initialisation (M3) relié en série au moyen de stockage entre les deux bornes d'alimentation, et des quatrième et cinquième transistors (M4, M5) connectés en série, dont une borne de commande du quatrième transistor est reliée au moyen de stockage pour une lecture du niveau de tension mémorisé sur le moyen de stockage, **caractérisé en ce que** le procédé comprend une série d'étapes consistant à :
a) commander la conduction des second et troisième transistors (M2, M3) pour imposer une première tension d'initialisation aux bornes de l'élément photo-détecteur (PD) et du moyen de stockage (C1), le premier transistor (M1) étant dans un état non conducteur,
b) interrompre la conduction du second transistor pour débuter une première période d'exposition dans laquelle l'élément photo-détecteur accumule des porteurs de charge fonction du niveau d'illumination captée,
c) commander la conduction du premier transistor (M1) pour imposer une seconde tension d'initialisation (V₂) aux bornes de l'élément photo-détecteur, la seconde tension d'initialisation étant inférieure à la première tension d'initialisation, si le niveau de tension aux bornes de l'élément photo-détecteur est inférieur à la seconde tension d'initialisation au terme de la première période d'exposition,
d) interrompre la conduction du premier transistor pour débuter une seconde période d'exposition dans laquelle l'élément photo-détecteur accumule des porteurs de charge,
e) commander la conduction du second transistor après l'interruption de conduction du troisième transistor pendant la seconde période d'exposition pour mémoriser le niveau de tension de l'élément photo-détecteur sur le moyen de stockage, et
f) lire le niveau de tension mémorisé sur le moyen de stockage, quand le second transistor est dans un état non conducteur, par la commande de conduction des quatrième et cinquième transistors.

2. Procédé selon la revendication 1, chaque pixel comprenant une photodiode inversement polarisée (PD) en tant qu'élément photo-détecteur, un condensateur (C1) en tant que moyen de stockage et les cinq transistors (M1 à M5) du type n-MOS, une borne de drain des premier, troisième et quatrième transistors (M1, M3, M4) étant connectée à la borne d'alimentation haute (V_{DD}) de la source de tension, la borne de source du premier transistor étant connectée à une borne de la photodiode, la borne de source du troisième transistor étant connectée à un noeud mémoire du condensateur, la borne de drain du second transistor (M2) étant connectée au noeud de connexion entre le premier transistor (M1) et la photodiode (PD), alors que la borne de source du second transistor est connectée au noeud mémoire du condensateur, **caractérisé en ce qu'**à l'étape a) du procédé, la commande de conduction du second transistor est effectuée par un signal d'échantillonnage (SH) appliqué sur la borne de grille du second transistor, qui est dans un état haut proche de la tension haute de la source de tension, alors que la commande de conduction du troisième transistor est effectuée par un premier signal d'initialisation (RST) appliqué sur la borne de grille du troisième transistor, qui est dans un état haut proche de la tension haute de la source de tension, **en ce qu'**à l'étape c) du procédé, la commande de conduction du premier transistor est effectuée par un second signal d'initialisation (TI) appliqué sur la borne de grille du premier transistor, qui est dans un état haut adapté à un niveau de tension en dessous de la tension haute de la source de tension.

3. Procédé selon l'une des revendications précédentes, pour lequel chaque pixel comprend un circuit de commande pour fournir un second signal d'initialisation (TI) au premier transistor (M1) dont le niveau de tension à l'état haut est adapté, ledit circuit de commande comportant un diviseur résistif avec au moins deux résistances (R1 à R5) connectées en série entre la borne d'alimentation haute (V_{DD}) et la borne d'alimentation basse (V_{SS}) de la source de tension, au moins un transistor commutateur (N1 à N4), dont la borne de drain est connectée au noeud de connexion des résistances adjacentes et la borne de source est connectée à la borne de grille du premier transistor, le transistor commutateur étant commandé par un signal de commande (Sel 1 à Sel 4) sur sa borne de grille pour le rendre conducteur ou non conducteur, **caractérisé en ce qu'**à l'étape c) du procédé, la conduction du premier transistor (M1) est effectuée en imposant sur sa borne de grille la tension présente au noeud de connexion des deux résistances adjacentes par l'intermédiaire du transistor commutateur, qui est rendu conducteur par le signal de commande (Sel 1 à Sel 4) à l'état haut proche de la tension haute de la source de tension.

4. Procédé selon la revendication 3, pour lequel le circuit de commande comprend un diviseur résistif constitué de cinq résistances (R1 à R5) connectées en série entre la borne d'alimentation haute et la borne d'alimentation basse de la source de tension, et quatre transistors commutateurs (N1 à N4) pour relier chaque noeud de connexion de deux résistances adjacentes à la borne de grille du premier transistor (M1), uniquement un transistor commutateur sélectionné étant commandé par un signal de commande pour fournir le second signal d'initialisation (TI) au premier transistor, **caractérisé en ce qu'**à l'étape c) du procédé, la commande de conduction du premier transistor (M1) est effectuée en imposant sur sa borne de grille la tension présente à un noeud de connexion sélectionné de deux résistances adjacentes par l'intermédiaire du transistor commutateur correspondant sur la base d'une mesure d'un niveau d'illumination moyen d'une prise d'image précédente.

5. Procédé selon la revendication 1, **caractérisé en ce qu'**à l'étape b), une interruption de la conduction du troisième transistor est effectuée pour débuter la première période d'exposition de l'élément photo-détecteur, qui est une photodiode (PD).

6. Procédé selon l'une des revendications précédentes, **caractérisé en ce qu'**après l'étape e) et avant l'étape f) du procédé, une commande de conduction du premier transistor (M1) est effectuée pour initialiser l'élément photo-détecteur, qui est une photodiode (PD), à la seconde tension d'initialisation inférieure à la première tension d'initialisation, le premier transistor restant dans un état conducteur pendant une partie de la durée de la phase de lecture.

7. Procédé selon l'une des revendications précédentes, **caractérisé en ce que** la durée de la première période d'exposition de l'élément photo-détecteur, qui est une photodiode (PD), est définie entre 4 à 100 fois la durée de la seconde période d'exposition de la photodiode, de préférence à 20 fois.
